# EUROPÄISCHE PATENTSCHRIFT

(11) **EP 0 975 686 B1**
(45) Veröffentlichungstag und Bekanntmachung des Hinweises auf die Patenterteilung: **03.07.2002**
(21) Anmeldenummer: 98921424.2
(22) Anmeldetag: 02.04.1998
(51) Int. Cl.: C08G 65/30, C08G 65/20

(54) **VERFAHREN ZUR ENTFÄRBUNG VON POLYMERISATEN ODER COPOLYMERISATEN DES TETRAHYDROFURANS**
METHOD FOR DECOLOURING TETRAHYDROFURAN POLYMERS OR COPOLYMERS
PROCEDE POUR LA DECOLORATION DE POLYMERISATS OU DE COPOLYMERISATS DU TETRAHYDROFURANE

(30) Priorität: 16.04.1997 DE 19715831
(43) Veröffentlichungstag der Anmeldung: 02.02.2000
(73) Patentinhaber: BASF AKTIENGESELLSCHAFT, 67056 Ludwigshafen (DE)
(72) Erfinder: BECKER, Rainer, D-67098 Bad Dürkheim (DE); ELLER, Karsten, D-67061 Ludwigshafen (DE); HESSE, Michael, D-67549 Worms (DE)
(86) Internationale Anmeldenummer: EP9801946
(87) Internationale Veröffentlichungsnummer: WO9846663

(56) Entgegenhaltungen:
- EP-A- 0 006 017
- EP-A- 0 052 213
- EP-A- 0 195 910
- EP-A- 0 241 890
- EP-A- 0 541 244
- DATABASE WPI Section Ch, Week 7545 Derwent Publications Ltd., London, GB; Class A25, AN 75-74948W XP002071157 & JP 50 092 999 A (SANYO CHEM IND LTD)

## Beschreibung

Die Erfindung betrifft ein Verfahren zur Entfärbung von Polymerisaten oder Copolymerisaten, die durch kationische Polymerisation von Tetrahydrofuran (THF) oder von THF und Alkylenoxid, gegebenenfalls in Gegenwart von Telogenen, erhalten werden.

Bekanntlich werden bei der Polymerisation von THF in Gegenwart von Carbonsäureanhydriden und starken Säuren Polytetramethylenetherglykol oder die entsprechenden Diester gebildet. Polytetramethylenetherglykole (PTHF) dieser Art, wie auch die durch Copolymerisation von THF mit Alkylenoxiden, wie Ethylenoxid oder Propylenoxid, als auch die durch Copolymerisation von THF und Alkylenoxiden in Gegenwart von Telogenen, wie zum Beispiel Wasser, Monocarbonsäuren, oder ein- oder mehrwertigen Alkoholen, erhältlichen Copolymere haben Molgewichte > 200. Sie werden insbesondere für die Herstellung von Polyurethanen verwendet.

Wie umfangreiche Untersuchungen ergeben haben, sind für die Polymerisation von THF in technischem wirtschaftlichem Maßstab saure Katalysatoren geeignet, die allerdings die nachteilige Wirkung haben, daß Polymerisate mit gelb bis bräunlichen Verfärbungen erhalten werden. Die Verfärbungen nehmen mit der Temperatur bei der Polymerisation zu. Darüber hinaus hängt die Reinheit des PTHF auch von der Qualität des eingesetzten THF ab.

Die technische Qualität enthält geringe Mengen an Verunreinigungen in einer Konzentration von 10 bis 500 ppm. Die chemische Natur dieser Verunreinigungen ist nicht in allen Einzelheiten bekannt. Obwohl dieses THF von sehr hoher Reinheit ist - es hat normalerweise einen Reinheitsgrad von 99,9 % - verursachen bereits Spuren an Verunreinigungen bei der Polymerisation die oben genannten Verfärbungen. Darüber hinaus beobachtet man gleichzeitig mit der Verfärbung eine veränderte Reaktionsfähigkeit bei der Herstellung von Polyestern oder Polyurethanen aus den Polytetramethylenetherglykolen. Dies sind gravierende Mängel, denn Farbe und reproduzierbare Verarbeitung gehören zu den wichtigsten Eigenschaften eines Polymerisates, das technische Anwendung finden soll.

Es sind deshalb zahlreiche Verfahren für die Behandlung von technischem THF zum Zwecke der Qualitätsverbesserung vorgeschlagen worden. So wird z.B. in der DE-A-2 801 792 ein Verfahren beschrieben, bei dem man THF vor der Polymerisation mit Bleicherden behandelt. Man erhält dabei zwar Polymerisate mit verbesserter Farbzahl, jedoch läßt sich diese Behandlungsmethode nicht in jedem Fall reproduzierbar auf jede verfügbare technische Qualität des THF anwenden.

Nach den Angaben der EP-A 61 668 stellt man Polytetramethylenetherglykol oder -glykoldiester mit geringer Farbzahl dadurch her, daß man die durch kationische Polymerisation von THF erhaltenen Polymerisate in Gegenwart eines Hydrierkatalysators einer Behandlung mit Wasserstoff unterwirft. Verwendet man bei der Polymerisation eine THF-Qualität, wie sie der Markt anbietet, so ist man gezwungen, die hydrierende Entfärbung bei sehr hohen Wasserstoffdrücken von z.B. 50 bis 300 bar durchzuführen. Dieses Hochdruckverfahren ist auch beim laufenden Betrieb kostspielig, da beispielsweise ein erheblicher Bedarf an Kompressionsenergie für Wasserstoff aufgebracht werden muß.

In vielen Fällen ist es sogar erforderlich, teure Edelmetallkatalysatoren zu verwenden. Die benötigten Katalysatoren haben auch häufig eine geringe Lebensdauer. Ähnliche Einschränkungen gelten auch für die entfärbende Reinigung der Polymerisate durch eine Aktivkohle-Behandlung, wie sie in den US-A 3 935 252 oder US-A 2 751 419 beschrieben werden. Diese Verfahren benötigten einen erheblichen apparativen Aufwand und verursachen zusätzliche nicht zu vernachlässigende Kosten für den Einsatz der Aktivkohle, die außerdem nur eine begrenzte Reinigungskapazität besitzt.

Da die einzelnen Verunreinigungen im THF, die zu Verfärbungen in den Endprodukten führen, nicht bekannt sind, und es selbst nach einer analytischen Untersuchung kaum möglich ist, vorauszusehen, ob die Qualität des verwendeten und gegebenenfalls vorbehandelten THF für die Polymerisation so geeignet ist, daß spezifikationsgerechte Polymerisate erhalten werden, macht es bei der großtechnischen Herstellung von PTHF die größten Schwierigkeiten, eine Ausschußproduktion sicher zu vermeiden.

Es bestand daher die Aufgabe, nach einem Verfahren zu suchen, das es gestattet, die Polymerisate und Copolymerisate des THF auf besonders einfache und wirksame Weise zu entfärben.

Es wurde nun ein Verfahren zur Entfärbung von Polymerisaten oder Copolymerisaten, die durch kationische Polymerisation von Tetrahydrofuran oder von Tetrahydrofuran und Alkylenoxid, gegebenenfalls in Gegenwart von Telogenen, erhalten werden, gefunden, das dadurch gekennzeichnet ist, daß man
a) zunächst gegebenenfalls die leichtsiedenden Anteile durch Vakuumdestillation oder Extraktion, beispielsweise mit überkritischen Gasen, abgetrennt und
b) das verbleibende Polymerisat oder Copolymerisat in Gegenwart mindestens eines Hilfsstoffs ausgewählt aus festen Oxiden "der Gruppe IVa des Periodensystems der Elemente, oder deren Gemische" und/oder Schichtsilikaten, bevorzugt aus der Montmorillonit-Saponit- oder Palygorskit-Sepiolith-Gruppe, auf eine Temperatur von 20 bis 150°C, bevorzugt von 20 bis 70°C, erhitzt.

Nach dem neuen Verfahren läßt sich hochreines PTHF mit niedriger Farbzahl sicher und reproduzierbar herstellen. Das neue Verfahren läßt sich auf alle Polymerisate und Copolymerisate des THF anwenden, die durch kationische Polymerisation von THF, oder durch kationische Copolymerisation von THF und Alkylenoxiden, wie Ethylenoxid oder Propylenoxid, gegebenenfalls in Gegenwart von Telogenen, erhalten werden.

Unter den Polymerisaten und Copolymerisaten des THF, die nach dem erfindungsgemäßen Verfahren gereinigt werden können, sind insbesondere Polytetramethylenetherglykole, Polytetramethylenetherglykol-Monoether, Polytetramethylenetherglykol-Monoester und Polytetramethylenetherglykol-Diester zu nennen.

Als Telogene, d.h. als Substanzen, die den Kettenabbruch bei der Polymerisation verursachen, eignen sich bei der Herstellung von Polytetramethylenetherglykol (PTHF) Wasser und/oder 1,4-Butandiol. Zur Herstellung von Polytetramethylenetherglykol-Monoestern werden im allgemeinen C₁-bis C₂₀-Monocarbonsäuren als Telogene gewählt. Vorzugsweise werden C₁-bis C₂₀-Monocarbonsäuren, insbesondere C₁-bis C₄-Monocarbonsäuren und besonders bevorzugt Ameisensäure, eingesetzt. Es können sowohl aliphatische als auch aromatische Monocarbonsäuren verwendet werden, je nachdem zu welchem Zweck der PTHF-Monocarbonsäureester verwendet werden soll. Bei der Herstellung von Polytetramethylenetherglykol-Monoethern setzt man als Telogen im allgemeinen einwertige C₁-bis C₂₀-Alkohole und besonders bevorzugt einwertige C₁-bis C₄-Alkohole, insbesondere tert.-Butanol sowie Benzylalkohol, ein. Es können sowohl aliphatische als auch aromatische einwertige Alkohole verwendet werden, je nachdem zu welchem Zweck der PTHF-Monoether eines einwertigen Alkohols verwendet werden soll. Bei der Herstellung der Polytetramethylenetherglykol-Monoester als auch bei der Herstellung der Polytetramethylenetherglykol-Monoethern kann Wasser, 1,4-Butandiol und/oder niedermolekulares PTHF in die PTHF-Kette einpolymerisiert werden. Zur Herstellung von Polytetramethylenglykol-Diestern werden im allgemeinen C₂-bis C₂₀ Monocarbonsäureanhydride, wie zum Beispiel Essigsäureanhydrid, als Telogene eingesetzt.

Man kann bei der Herstellung der Polymerisate und Copolymerisate von einem THF handelsüblicher Qualität ausgehen. Dabei spielt es keine Rolle, ob das THF auf der Basis von Acetylen und Formaldehyd, Maleinsäureanhydrid, Alkylalkohol oder Butadien hergestellt worden ist.

Unter Polymerisaten im Sinne der Erfindung sind Polymerisate und Copolymerisate des Tetrahydrofurans mit Polymerisationsgraden größer als 2 zu verstehen.

Mit dem neuen Verfahren lassen sich THF-Polymerisate und -Copolymerisate, die üblicherweise Farbzahlen von 40 bis 150 APHA aufweisen, sicher und wirksam entfärben, wobei Farbzahlen von 10 bis 50 APHA erreicht werden. Die primär gelblichen oder bräunlichen Polymerisate und Copolymerisate werden nach dem erfindungsgemäßen Verfahren zu farblosen Polymerisaten bzw. Copolymerisaten entfärbt. Die Bestimmung der Farbzahlen wird in den Normen DIN 53409 und ASTM-D-1209 beschrieben.

Man kann die erfindungsgemäß zu entfärbenden Polymerisate und Copolymerisate direkt oder gelöst in Lösungsmitteln einsetzen. Die bevorzugte Ausführungsform des Verfahrens ist die lösungsmittelfreie Fahrweise, wobei man die Sumpffahrweise anwendet. Dabei ist der Hilfsstoff entweder in einem Festbett angeordnet oder aber der Hilfsstoff ist in dem nach dem erfindungsgemäßen Verfahren zu behandelnden Polymerisat suspendiert.

Als fester oxidischer Hilfsstoff werden in dem erfindungsgemäßen Verfahren Oxide der Gruppe IVa, des Periodensystems der Elemente oder deren Gemische, bevorzugt Oxide von Titan, Zirkon, oder besonders bevorzugt, Titandioxid und Zirkoniumdioxid, eingesetzt.

Auch Schichtsilikate der Palygorskit-Sepiolith-Gruppe, bevorzugt, Attapulgit oder Sepiolith, wie sie beispielsweise in Klockmanns Lehrbuch der Mineralogie, 16. Auflage, F. Euke Verlag 1978, Seiten 739-765 beschrieben werden, können in dem erfindungsgemäßen Verfahren als Hilfsstoff verwendet werden.

Für die Verwendung in dem erfindungsgemäßen Verfahren geeignete Attapulgite werden beispielsweise von der Firma Engelhard Corporation, Iselin, USA, unter den Handelsbezeichnungen Attasorb® RVM und Attasorb® LVM vertrieben.

Vorzugsweise verwendet man im wesentlichen wasserfreie Schichtsilikate, die man aus den handelsüblichen wasserhaltigen Schichtsilikaten durch Trocknen bei Temperaturen von 80 bis 200°C bei Normaldruck oder vermindertem Druck erhält. Der Wassergehalt sollte insbesondere kleiner als 0,1 Gew.% sein und 0,2 Gew.-% nicht übersteigen. Die im erfindungsgemäßen Verfahren verwendeten Schichtsilikate können durch Säurebehandlung vor ihrer Verwendung aktiviert werden.

Die erfindungsgemäß anwendbaren Hilfsstoffe können in Form von Pulver, beispielsweise bei der Durchführung des Verfahrens in Suspensionsfahrweise, oder zweckmäßigerweise als Formkörper, z.B. in Form von Zylindern, Kugeln, Ringen, Spiralen oder Splitt, insbesondere bei einer Festbettanordnung des Katalysators, welche bei Verwendung von z.B. Schlaufenreaktoren oder beim kontinuierlichen Betrieb des Verfahrens bevorzugt ist, im erfindungsgemäßen Verfahren eingesetzt werden.

Die Entfärbung der THF-Polymerisate oder Copolymerisate nach dem erfindungsgemäßen Verfahren kann kontinuierlich oder diskontinuierlich erfolgen.

Zur Durchführung des erfindungsgemäßen Verfahrens in diskontinuierlicher Arbeitsweise, beispielsweise in Suspensions- oder Batchfahrweise, können Rührbehälter oder Strahldüsenreaktoren verwendet werden. Vorteilhafte Ergebnisse werden erzielt, wenn man 0,1 bis 10 Gew.-% Hilfsstoff, bezogen auf das Polymerisat oder Copolymerisat, anwendet. Man kann aber auch geringere oder größere Mengen anwenden.

Anstelle der vorstehend beschriebenen diskontinuierlichen Arbeitsweise kann man kontinuierlich arbeiten, wobei die Durchführung des erfindungsgemäßen Verfahrens im Festbettfahrweise bevorzugt ist.

Die Erfindung wird anhand der folgenden Beispiele erläutert, die bevorzugte Ausführungsformen der Erfindung darstellen.

### Beispiel 1 (Nicht erfinderisch)

Aus 1700 g Polytetramethylenetherglykol-Diacetat-Rohprodukt, erhalten nach dem in der DE-AS 1 226 560 beschriebenen Verfahren durch Umsetzung von THF mit Essigsäureanhydrid an Bleicherdekatalysatoren, wurden durch Destillation bei 140°C und 10 mbar die niedermolekularen Anteile abgetrennt. 845 g des Polytecramethylenetherglykol-Diacetat enthaltenden Destillationsrückstandes miteiner Farbzahl von 125 APHA wurden in einem Reaktionsgefäß, das mit Heizung und Rührer ausgerüstet war, unter N₂-Schutzgas mit 84,5 g Montmorillonit (K 10 der Firma Süd-Chemie AG) bei 30°C gerührt.

Nach 24, 48, 96 und 196 h wurden dem Reaktionsgefäß Proben entnommen, deren Farbzahl nach dem Abfiltrieren des Montmorillonits bestimmt wurde. Die ermittelten Farbzahlen sind in der folgenden Tabelle 1 zusammengestellt.

**Tabelle 1:**

| | | | | |
|---|---|---|---|---|
| Versuchsdauer (h) | 24 | 48 | 96 | 196 |
| Farbzahl (APHA) | 35 | 25 | 20 | 15 |

### Beispiel 2

Analog zu Beispiel 1 wurden aus dem Polytetramethylenetherglykol-Diacetat-Rohprodukt die niedermolekularen Anteile durch Destillation abgetrennt. Sodann wurden 340 g des Polytetramethylenetherglykol-Diacetat enthaltenden Destillationsrückstandes (Farbzahl: 100 APHA) mit 34 g handelsüblichem Titandioxid (Titandioxid VKR 611 der Firma Sachtleben) 19 h bei 27°C gerührt. Das nach dem Abfiltrieren des Titandioxids erhaltene Polytetramethylenetherglykol-Diacetat wies eine Farbzahl von 15 APHA auf.

### Beispiel 3

Analog Beispiel 1 wurden aus dem Polytetramethyletherglykol-Diacetat-Rohprodukt die niedermolekularen Anteile durch Destillation abgetrennt. Sodann wurden 340 g des Polytetramethylenetherglykol-Diacetat enthaltenden Destillationsrückstandes (Farbzahl: 100 APHA) mit 34 g handelsüblichem Zirkoniumdioxid (Zirkoniumdioxid E101 der Firma MEL) 19 h bei 27°C gerührt. Das nach dem Abfiltrieren des Zirkoniumdioxids erhaltene Polytetramethylenetherglykol-Diacetat wies eine Farbzahl von 40 APHA auf.

### Beispiel 4 (nicht erfinderisch)

Analog Beispiel 1 wurden aus dem Polytetramethylenetherglykol-Diacetat-Rohprodukt die niedermolekularen Anteile durch Destillation abgetrennt.

Sodann wurden 340 g des Polyetetramethylenetherglykol-Diacetat enthaltenden Destillationsrückstandes (Farbzahl: 100 APHA) mit 34 g handelsüblichem Aluminiumoxid (der Firma Alcoa) 19 h bei 27°C gerührt. Das nach dem Abfiltrieren des Aluminiumoxids erhaltene Polytetramethylenglykolether-Diacetat wies eine Farbzahl von 20 APHA auf.

### Beispiel 5 (nicht erfinderisch)

Analog Beispiel 1 wurden aus dem Polytetramethylenetherglykol-Diacetat-Rohprodukt die niedermolekularen Anteile durch Destillation abgetrennt.

Sodann wurden 340 g des Polytetramethylenetherglykol-Diacetat enthaltenen Destillationsrückstandes (Farbzahl: 100 APHA) mit 34 g handelsüblichem Siliciumdioxid (der Firma BASF) bei 25°C gerührt.

Das erhaltene Polytetramethylenglykolether-Diacetat wies eine Farbzahl von 40 APHA auf.

### Beispiel 6

250 ml TiO₂-Stränge (aus P25 der Fa. Degussa) wurden in einen Rohrreaktor eingebaut und im geraden Durchgang mit Polytetramethylenetherglykol-Diacetat-Rohprodukten unterschiedlicher Farbe beschickt. Bei einer Temperatur von 30°C und 20 h Verweilzeit im Reaktor wurde die Farbzahl von 70 auf 40 APHA reduziert oder bei 40°C und 40 h Verweilzeit von 125 auf 90 APHA. Innerhalb der Versuchsdauer von 53 Tagen wurden bei verschiedenen Einstellungen im Mittel 30 APHA Aufhellung erreicht. Eine Desaktivierung des Entfärbungskatalysators oder der Titan-Austräge konnten nicht festgestellt werden.

## Patentansprüche

1. Verfahren zur Entfärben von Polymerisaten oder Copolymerisaten, die durch kationische Polymerisation von Tetrahydrofuran oder von Tetrahydrofuran und Alkylenoxid, gegebenenfalls in Gegenwart von Telogenen erhalten werden, **dadurch gekennzeichnet, daß** man
a) zunächst gegebenenfalls die leichtsiedenden Anteile durch Vakuumdestillation oder Extraktion abtrennt und
b) das verbleibende Polymerisat oder Copolymerisat in Gegenwart mindestens eines Hilfsstoffs, ausgewählt aus festen Oxiden der Gruppen IVa des Periodensystems der Elemente oder deren Gemische und/oder Schichtsilikaten aus der Palygorskit-Sepiolith-Gruppe, auf eine Temperatur von 20 bis 150°C erhitzt.

2. Verfahren nach Anspruch 1, **dadurch gekennzeichnet, daß** als Schichtsilikat Attapulgit oder Sepiolith eingesetzt wird.

3. Verfahren nach einem der Ansprüche 1 oder 2, **dadurch gekennzeichnet, daß** die Schichtsilikate vor ihrer Verwendung durch Säurebehandlung aktiviert werden.

4. Verfahren nach Anspruch 1, **dadurch gekennzeichnet, daß** man feste Oxide von Titan oder Zirkon einsetzt.

## Claims

1. A process for decolorizing polymers or copolymers which are obtained by cationic polymerization of tetrahydrofuran or of tetrahydrofuran and alkylene oxide, in the presence or absence of telogens, which comprises
a) first, if desired, removing the low-boiling components by vacuum distillation or extraction and
b) heating the remaining polymer or copolymer in the presence of at least one auxiliary selected from the group consisting of solid oxides of group IVa of the Periodic Table of the Elements or mixtures thereof and/or sheet silicates selected from the palygorskite-sepiolite group to from 20 to 150°C.

2. A process as claimed in claim 1, wherein the sheet silicate used is attapulgite or sepiolite.

3. A process as claimed in claim 1 or 2, wherein the sheet silicates are activated by acid treatment before use.

4. A process as claimed in claim 1, wherein solid oxides of titanium or zirconium are used.

## Revendications

1. Procédé de décoloration de polymères ou de copolymères que l'on a obtenu au moyen d'une polymérisation cationique du tétrahydrofuranne ou de tétrahydrofuranne et d'un oxyde d'alkylène, éventuellement en présence de télogènes, **caractérisé en ce que** l'on
a) sépare éventuellement dans un premier temps les composants à bas point d'ébullition, au moyen d'une extraction ou d'une distillation sous vide, et
b) chauffe, à une température comprise entre 20°C et 150°C, le polymère ou le copolymère restant, en présence d'au moins un produit auxiliaire, choisi dans le groupe formé par les oxydes solides du groupe IVa de la classification périodique des éléments ou de leurs mélanges et/ou les silicates stratifiés du groupe des palygorskit-sépiolithes.

2. Procédé selon la revendication 1, **caractérisé en ce que** l'on met en oeuvre, en tant que silicate stratifié, l'atapulgite ou la sépiolithe.

3. Procédé selon la revendication 1 ou 2, **caractérisé en ce que** l'on procède à une activation des silicates stratifiés préalablement à leur mise en oeuvre, au moyen d'un traitement avec des acides.

4. Procédé selon la revendication 1, **caractérisé en ce que** l'on met en oeuvre les oxydes solides du titane ou du zirconium.
